(19) 

Europäisches
Patentamt
European
Patent Office
Office européen
des brevets

(11) **EP 2 495 588 A1**

(12) **EUROPEAN PATENT APPLICATION**
published in accordance with Art. 153(4) EPC

(43) Date of publication:
    **05.09.2012 Bulletin 2012/36**

(21) Application number: **10826242.9**

(22) Date of filing: **15.01.2010**

(51) Int Cl.:
    **G02B 5/04** (2006.01)      **G02B 5/02** (2006.01)
    **G03B 15/02** (2006.01)

(86) International application number:
    **PCT/JP2010/000211**

(87) International publication number:
    **WO 2011/052101 (05.05.2011 Gazette 2011/18)**

(84) Designated Contracting States:
    **AT BE BG CH CY CZ DE DK EE ES FI FR GB GR
    HR HU IE IS IT LI LT LU LV MC MK MT NL NO PL
    PT RO SE SI SK SM TR**

(30) Priority: **30.10.2009 JP 2009251481**

(71) Applicant: **Fujitsu Frontech Limited
    Inagi-shi
    Tokyo 206-8555 (JP)**

(72) Inventors:
    • **YAMAZAKI, Kozo**
      **Inagi-shi**
      **Tokyo 206-8555 (JP)**
    • **IWAGUCHI, Isao**
      **Inagi-shi**
      **Tokyo 206-8555 (JP)**

(74) Representative: **Holz, Ulrike
    Haseltine Lake LLP
    Lincoln House, 5th Floor
    300 High Holborn
    London WC1V 7JH (GB)**

(54) **PRISM PLATE, ILLUMINATION OPTICAL SYSTEM OF IMAGING DEVICE, AND MOLD FOR PRISM PLATE**

(57)    A prism plate is obtained which gives directivity
to the exit directions of illumination light and enables con-
trol of the illuminance distribution. A prism plate 11 in-
cludes a prism surface 12 on which a prism array in the
shape of a triangular pole having multiple ridgelines 13
is formed, and in which minute bumps and dips 14 are
formed on the prism surface 12.

F I G. 8

EP 2 495 588 A1

## Description

FIELD

The inventions discussed herein are related to a prism plate which can control the exit direction or the like of incident light, an illumination optical system of an imaging device, and a forming die of a prism plate.

BACKGROUND

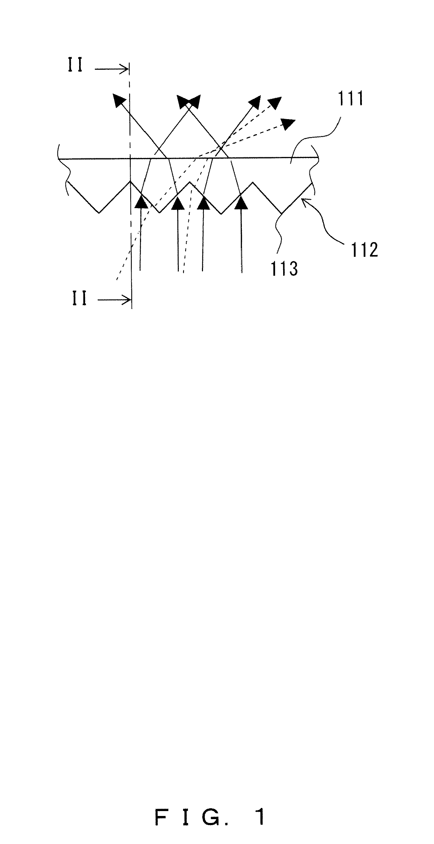

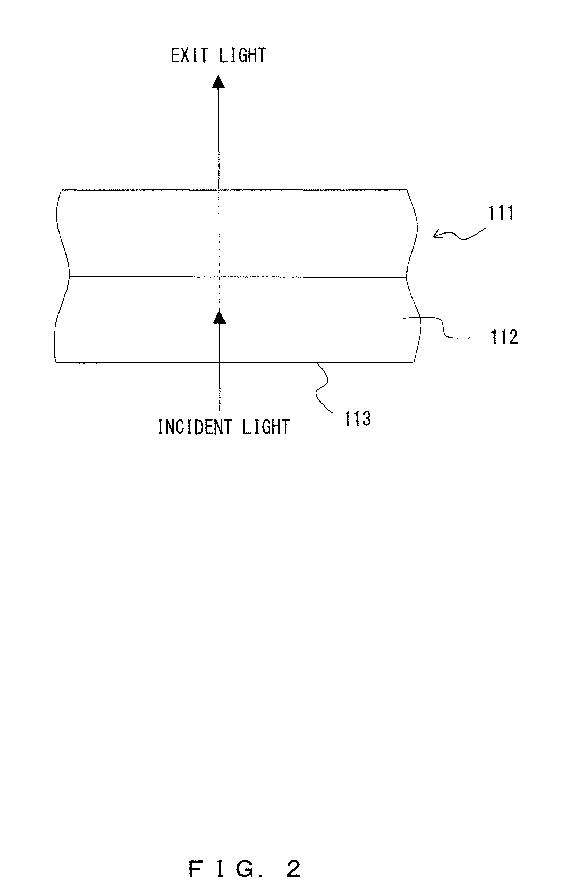

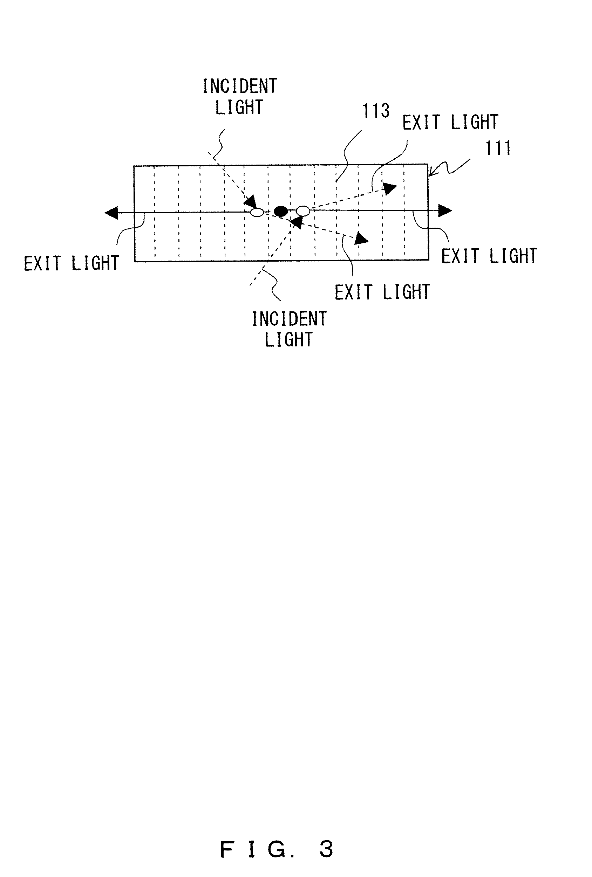

FIG. 1 is a diagram illustrating the control of the exit directions of light by using a prism plate 111. FIG. 2 is a diagram illustrating the prism plate 111 viewed from the II-II direction, and FIG. 3 is a diagram illustrating the directional patterns of the light exiting from the prism plate 111.

As illustrated in FIG. 1, the prism plate 111 includes a prism surface 112 on which a prism array having multiple ridgelines 113 is arranged in parallel, and has the function of deflecting the light incident on the prism surface 112 (solid lines and broken lines) to the right and left. For this reason, the prism plate 111 is used for an illumination optical system or the like as an optical element which controls the exit directions of light.

As indicated by the solid lines in FIGs. 2 and 3, the light vertically incident on the prism surface 112 deflects only to the right and left of FIG. 3 (tangential directions), and is not directed to the direction of the ridgelines 113.

As illustrated in FIGs. 1-3, the light beam entering from the prism surface 112 deflects from the prism plate 111.

As indicated by the broken lines in FIGs. 1 and 3, when light enters three-dimensionally from various directions instead of only vertically, the exit directions vary depending on the incident directions. However, the light is still not directed to the direction of the ridgelines 113, and the light indicates strong directivity toward the right and left of FIG. 3.

As described above, even if the direction of incident light is controlled, it is not possible to direct the exiting light to the direction of the ridgelines 113. Accordingly, if a directivity of illumination is desired but a dead zone is unwanted, that is, if it is desired that the illumination light is also distributed in the directions of the ridgelines of a prism array, it is necessary to diffuse the exiting light.

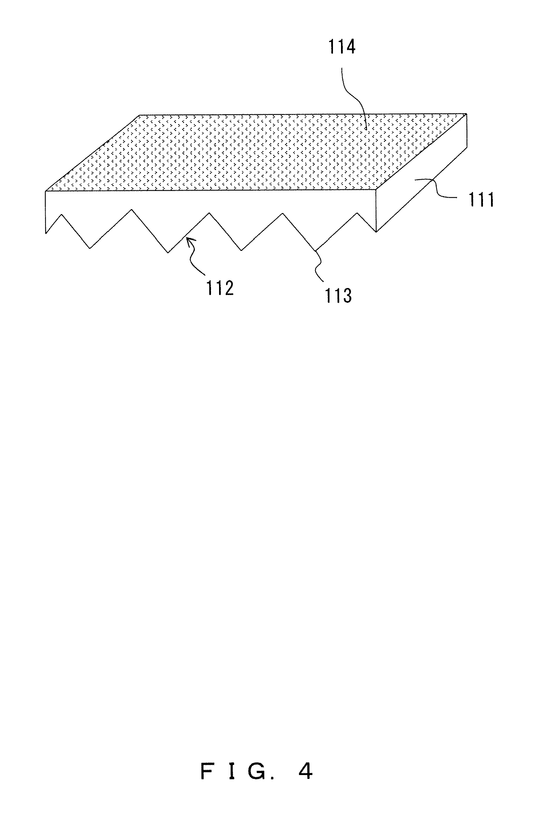

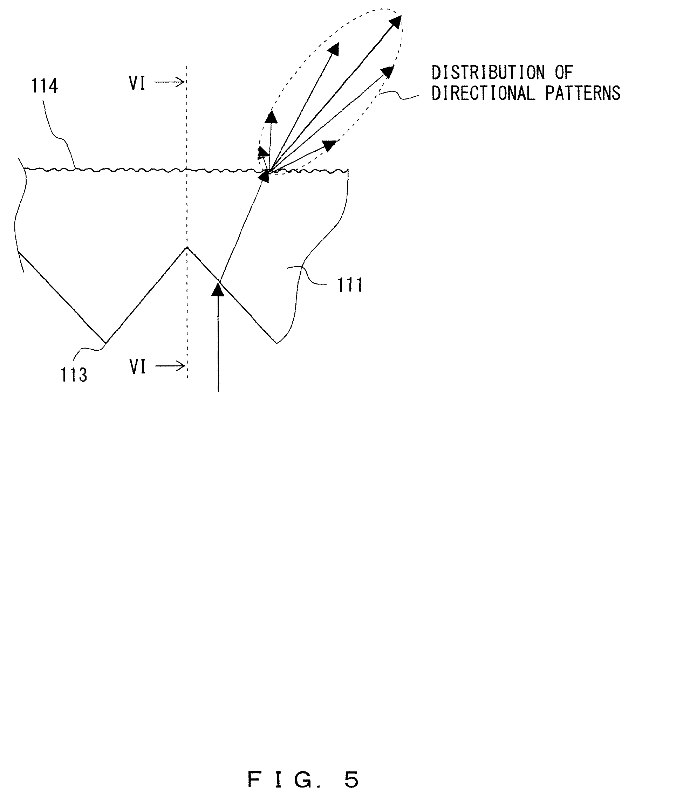

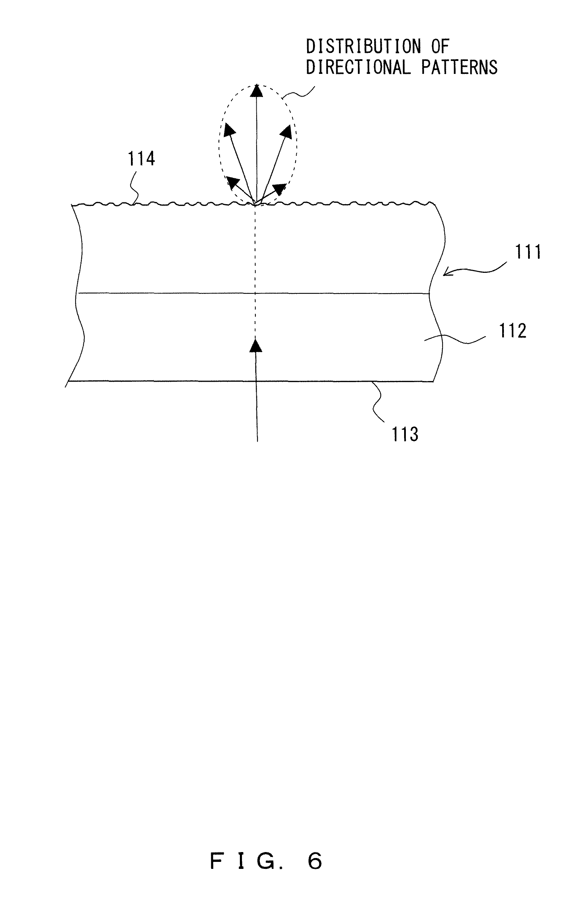

FIG. 4 is a diagram illustrating an example in which blasting is performed on the exit surface of the prism plate 111 to form minute bumps and dips (diffusing surface). FIG. 5 is a diagram illustrating the directional patterns of the light exiting from the prism plate 111 on an exit surface on which blasting is performed, and FIG. 6 is a diagram illustrating the prism plate 111 viewed from VI-VI direction.

In this case, as illustrated in FIGs. 5 and 6, the light deflected by the prism plate 111 is diffused on the exit surface, and is partly directed to the direction of the ridgelines 113. As a result, it is possible for the illumination light exiting from the prism plate 111 to be distributed in all the directions while the directivity to the right and left is maintained.

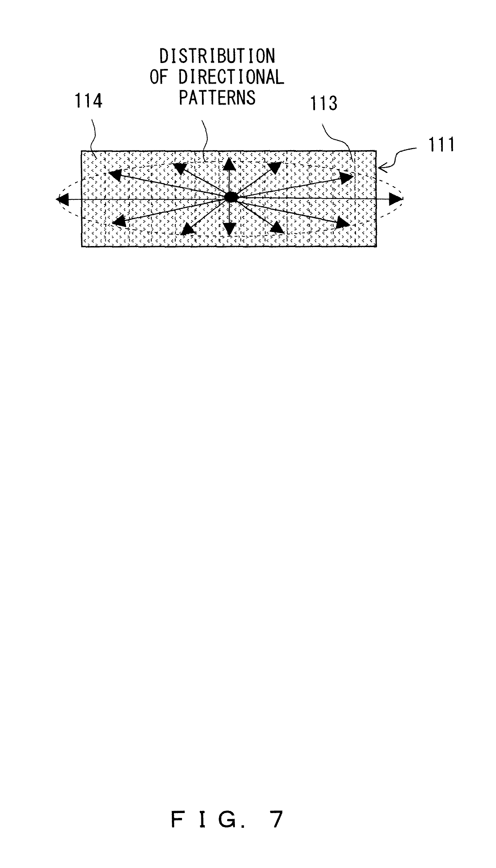

FIG. 7 is a diagram illustrating the prism plate 111 viewed from the exit surface where the directivity distribution of exiting light is indicated.

As is apparent from FIG. 7, the light exiting from the prism plate 111 indicates ellipse-shaped directivity where the width is longer in the right and left directions. If blasting is performed on the exit surface to achieve a diffusion effect as described above, it is possible to eliminate a dead zone in the exit directions of illumination. Moreover, it is possible to control the directivity of exiting light by altering the blasting intensity.

In a similar manner, for example, Patent Document 1 discloses a technique in which minute convex portions are randomly formed on the exit surface of an emitting light control plate, and the light entering from a plane of incidence is dispersed by the minute convex portion. Moreover, Patent Document 2 discloses a technique in which oblique incident light from a light-guiding plate is converted to the vertical direction by a prism sheet, and then the exiting light is diffused by the minute bumps and dips which are formed on the exit surface.

However, in the above-mentioned related art or the techniques disclosed in Patent Document 1 and Patent Document 2, as is apparent from FIGs. 5 and 6, the optical axis of exiting light is deflected by a prism, and thus there is a strong directivity. As a result, the directivity distribution of exiting light of FIG. 7 is always an ellipse where the longer dimension is oriented in the right and left directions, and there has been a limit to the distribution of light to the direction of the ridgelines of a prism, that is, the control of directivity.

PRIOR ART DOCUMENTS

PATENT DOCUMENTS:

[Patent Document 1] Japanese Patent No. 4198246
[Patent Document 2] Japanese Laid-open Patent Publication No. 2007-264639

SUMMARY

The present invention provides a prism plate which gives directivity to the exit directions of incident light and enables control of the illuminance distribution, an illumination optical system of an imaging device, and a forming die of a prism plate. The prism plate includes a prism surface on one side of which a prism array in the shape of a triangular pole having multiple ridgelines is formed, and minute bumps and dips formed on the prism surface.

The present invention provides an illumination optical system of an imaging device for irradiating an object to be captured with light so as to receive and capture light reflected from the object to be captured, where the illumination optical system including a plurality of luminous elements arranged around the imaging device and a ring-shaped prism plate, where in order to irradiate the object to be captured with light emitted from the plurality of luminous elements, a prism surface on a circumference of which a prism array in the shape of a triangular pole having multiple ridgelines in radial directions is formed is arranged on a side of the plurality of luminous elements, and minute bumps and dips are formed on the prism surface.

Furthermore, the present invention provide a forming die of a prism plate which has a first die and a second die arranged so as to be opposite to each other, and forms a prism plate by heat-softening and pressurizing a forming material arranged between the first die and the second die or forms a prism plate by injecting a forming material between the first die and the second die, where a prism array in the shape of a triangular pole having multiple ridgelines is formed on a forming surface of one of the first die or the second die, and minute bumps and dips are formed on an oblique surface of the prism array at least on a side of the first die and the second die on which the prism array is formed.

BRIEF DESCRIPTION OF DRAWINGS

FIG. 1 is a diagram illustrating the control of the exit directions of light by using a prism plate.
FIG. 2 is a diagram illustrating the prism plate of FIG. 1 viewed from the II-II direction.
FIG. 3 is a diagram illustrating the directional patterns of the light exiting from a prism plate.
FIG. 4 is a diagram illustrating an example in which blasting is performed on the exit surface of a prism plate to form a diffusing surface.
FIG. 5 is a diagram illustrating the directional patterns of the light exiting from a prism plate on an exit surface on which blasting is performed.
FIG. 6 is a diagram illustrating the prism plate of FIG. 5 viewed from the VI-VI direction.
FIG. 7 is a diagram illustrating a prism plate viewed from the exit surface where the directivity distribution of exiting light is indicated.

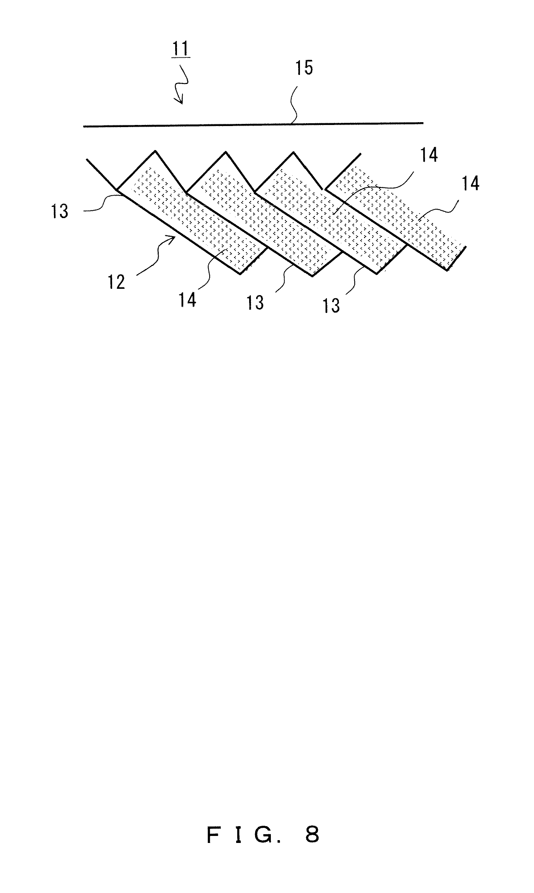

FIG. 8 is an external perspective view of a prism plate of the present embodiment.

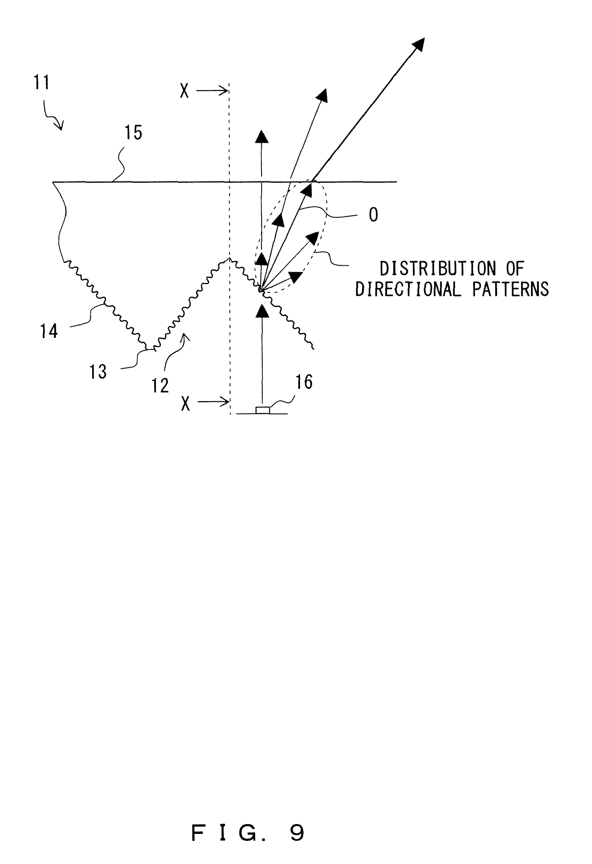

FIG. 9 is a diagram illustrating directional patterns of the light exiting from a prism plate.

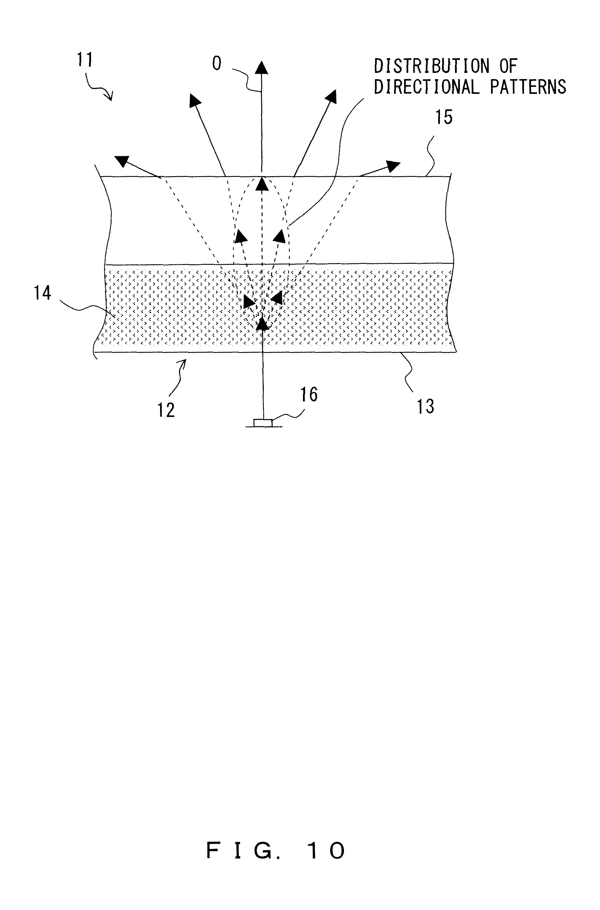

FIG. 10 is a diagram illustrating the prism plate of FIG. 9 viewed from the X-X direction.

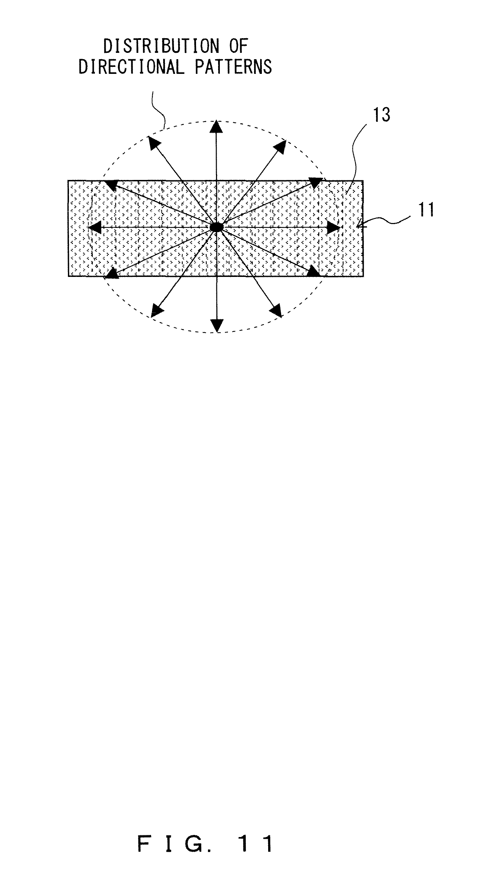

FIG. 11 is a diagram illustrating the directional patterns of exiting light viewed from an exit surface when strong blasting has been performed on a prism surface.

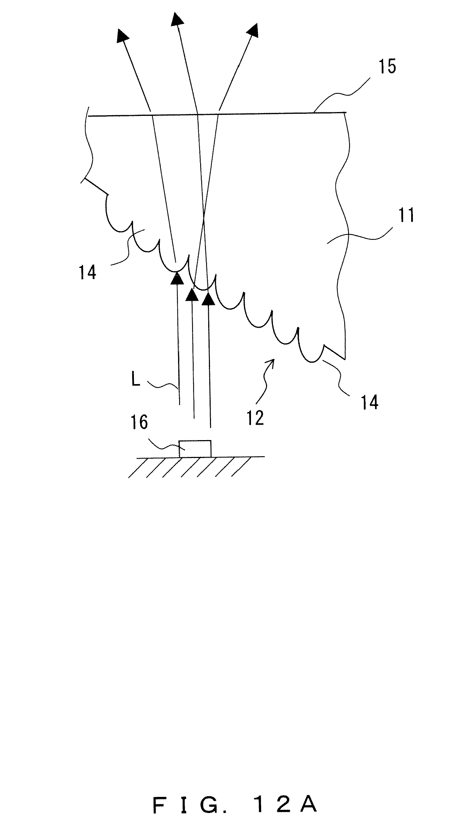

FIG. 12A is a diagram schematically illustrating the refraction state of light when strong blasting was performed on a prism surface.

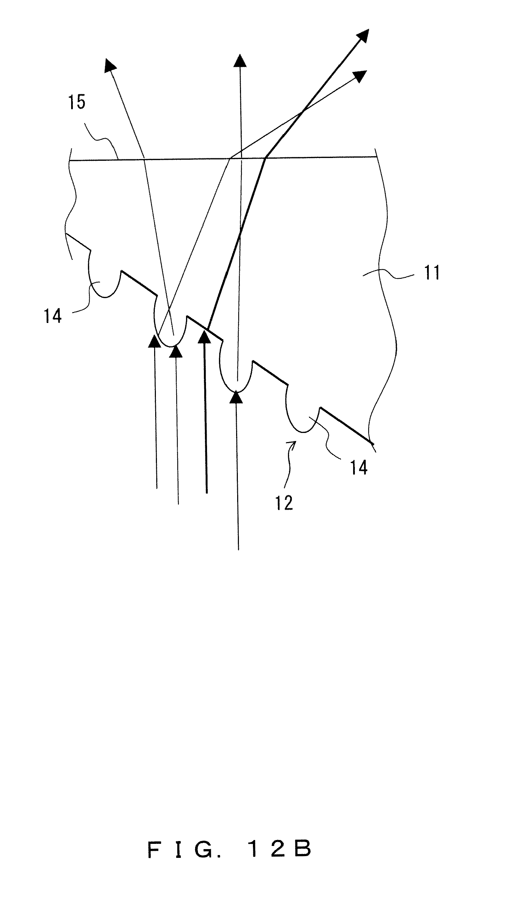

FIG. 12B is a diagram schematically illustrating the refraction state of light when a period during which blasting is performed on a prism surface is shortened.

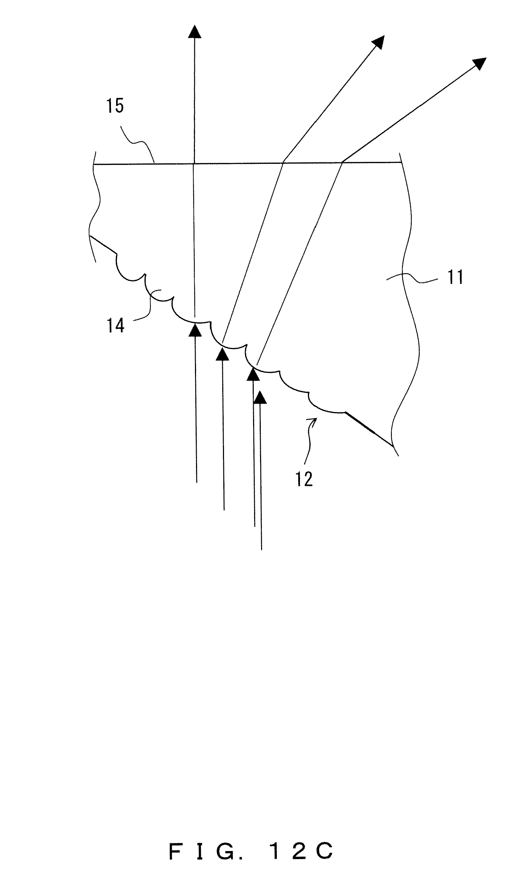

FIG. 12C is a diagram schematically illustrating the refraction state of light when the blast injection pressure (flow velocity) to a prism surface is lowered.

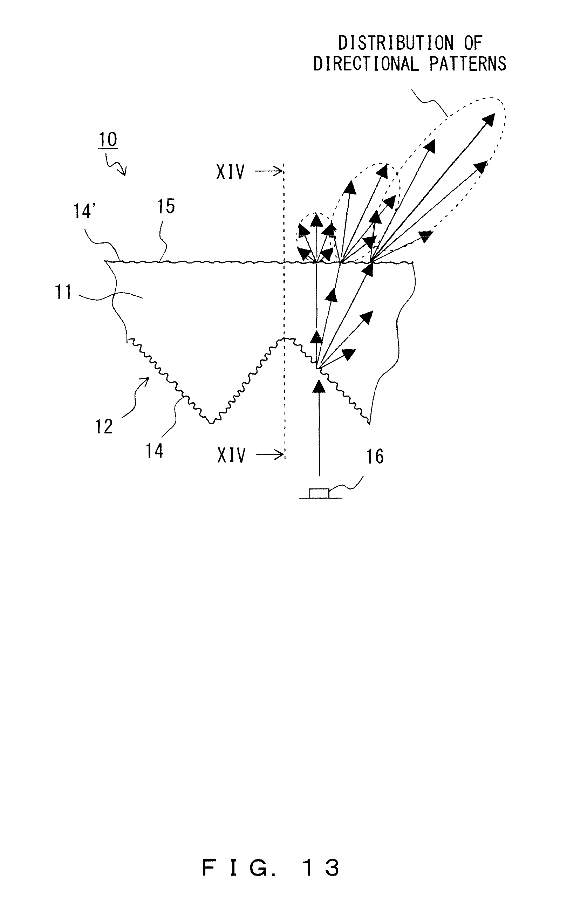

FIG. 13 is a diagram illustrating the directional patterns of the light exiting from a prism plate.

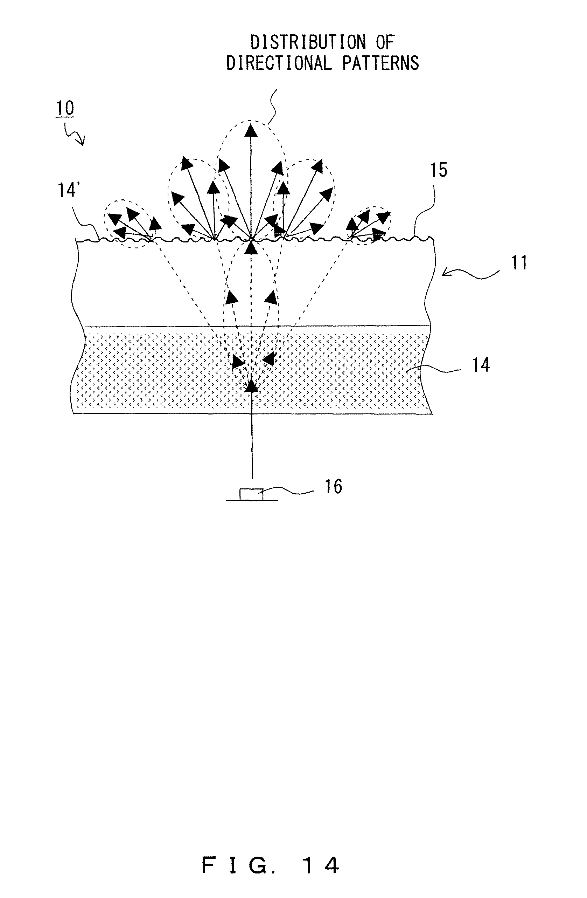

FIG. 14 is a diagram illustrating the prism plate of FIG. 13 viewed from the XIV-XIV direction.

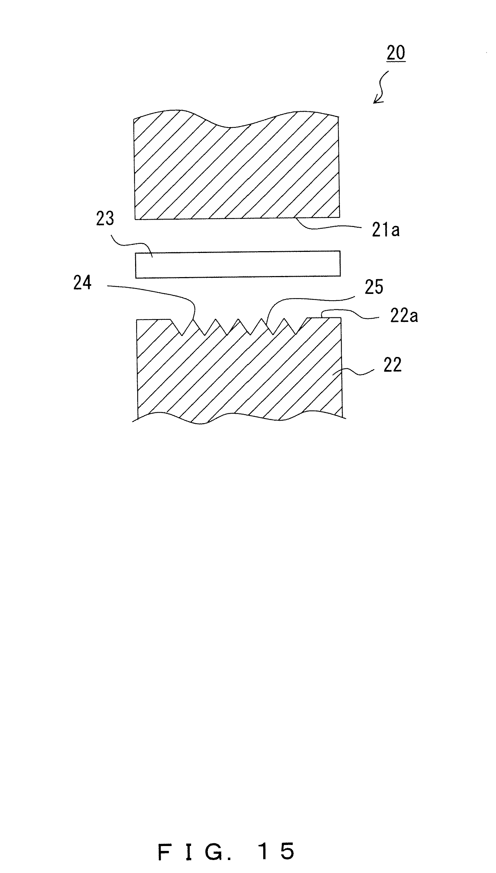

FIG. 15 is a diagram illustrating the configuration of a forming metal die of a prism plate.

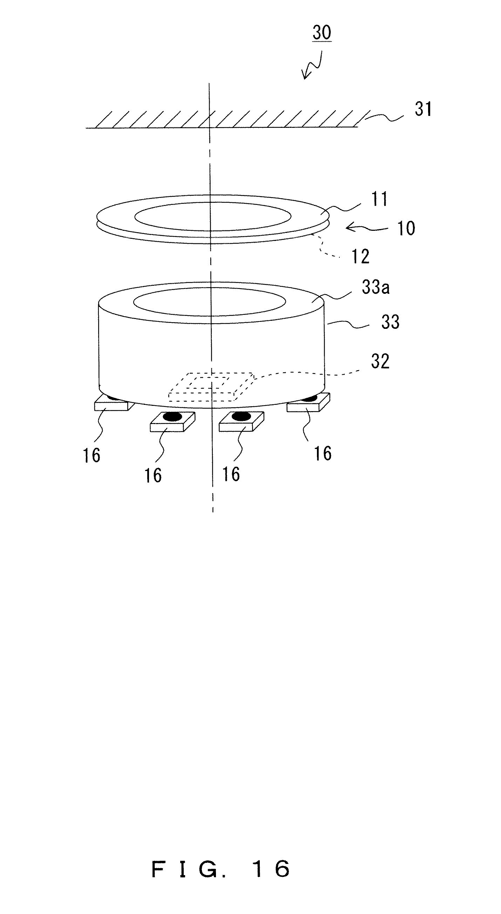

FIG. 16 is a diagram illustrating a case in which an illumination optical system is applied to an imaging device for reading information.

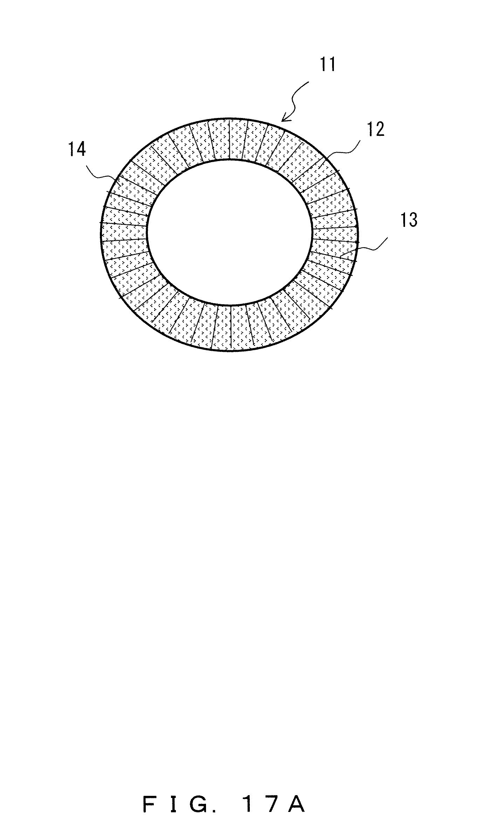

FIG. 17A is a diagram illustrating a prism plate viewed from a prism surface.

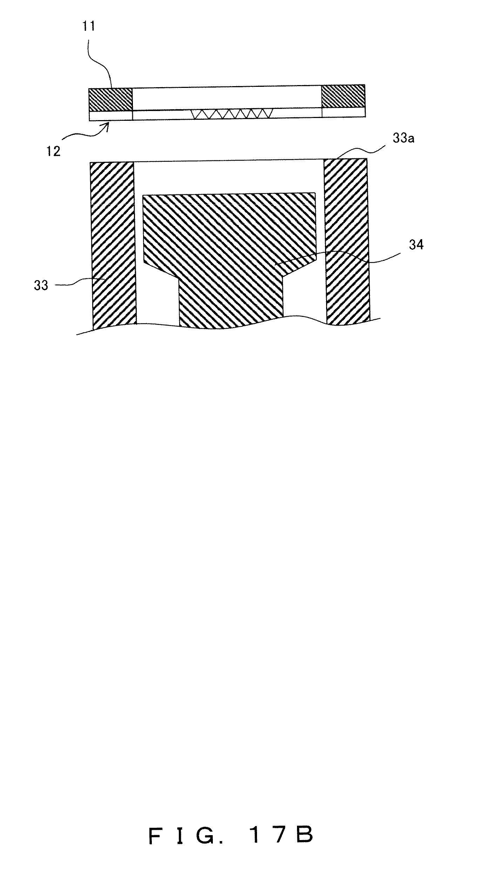

FIG. 17B is a diagram illustrating the positional relationship between a prism surface and a light guide.

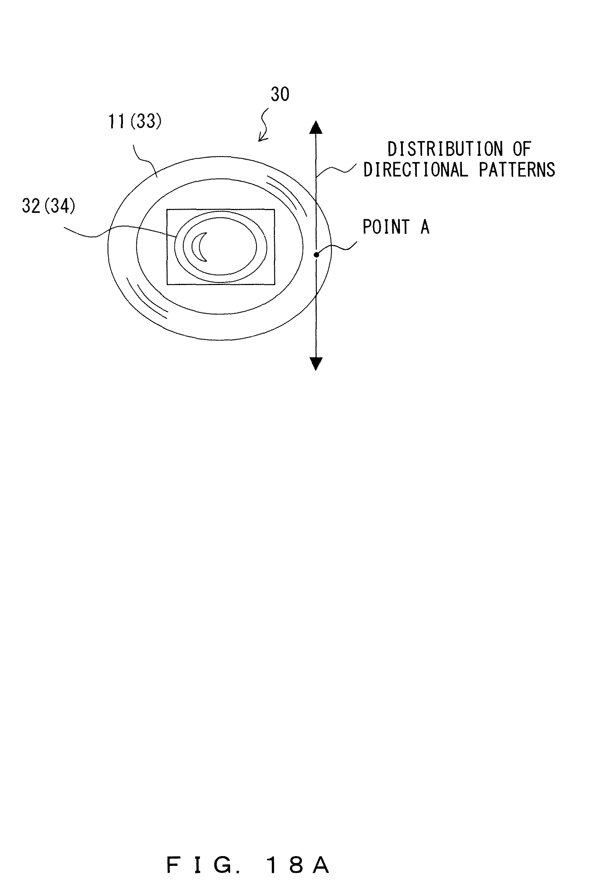

FIG. 18A is a diagram illustrating the distribution of the directional patterns of exiting light for a case in which no blasting is performed.

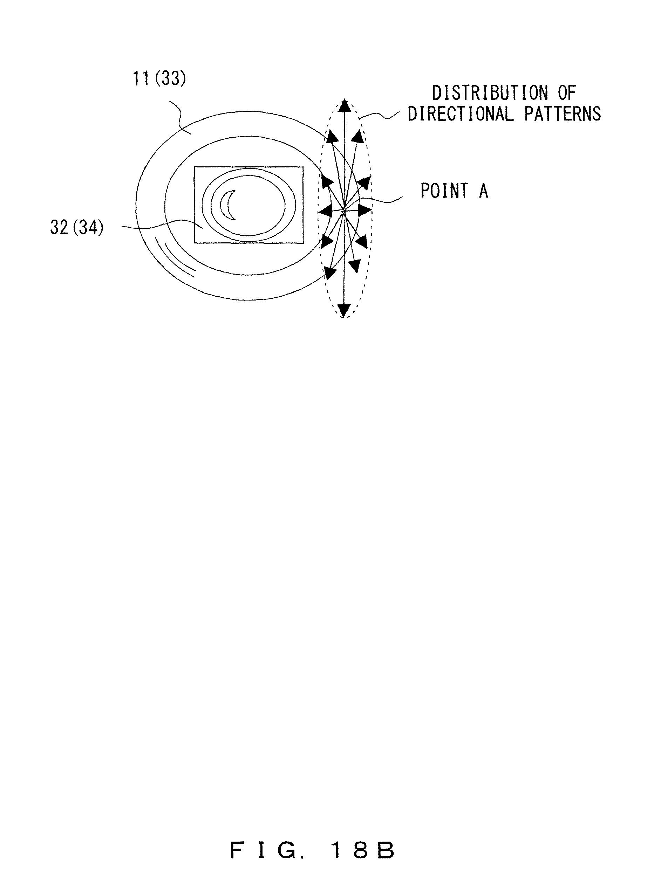

FIG. 18B is a diagram illustrating the distribution of the directional patterns of exiting light for a case in which weak blasting is performed.

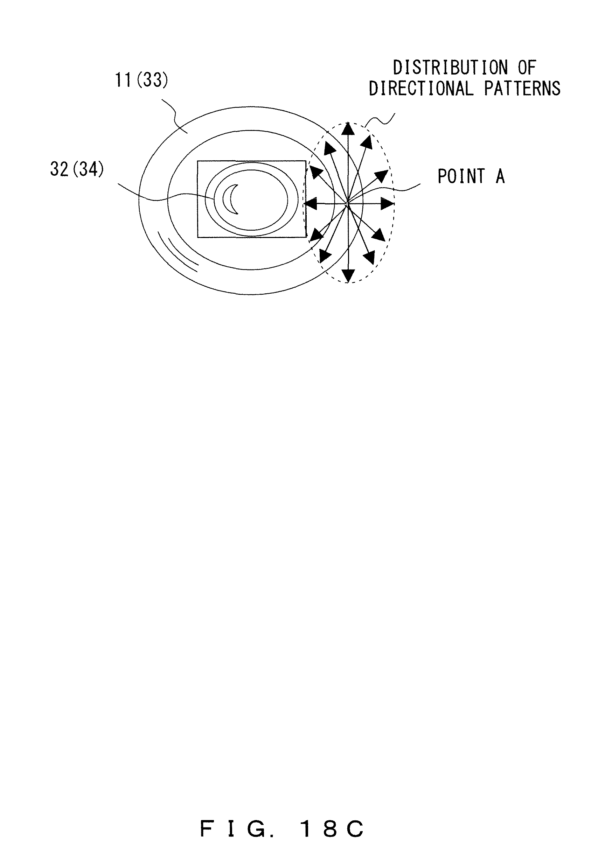

FIG. 18C is a diagram illustrating the distribution of the directional patterns of exiting light for a case in which moderately strong blasting is performed.

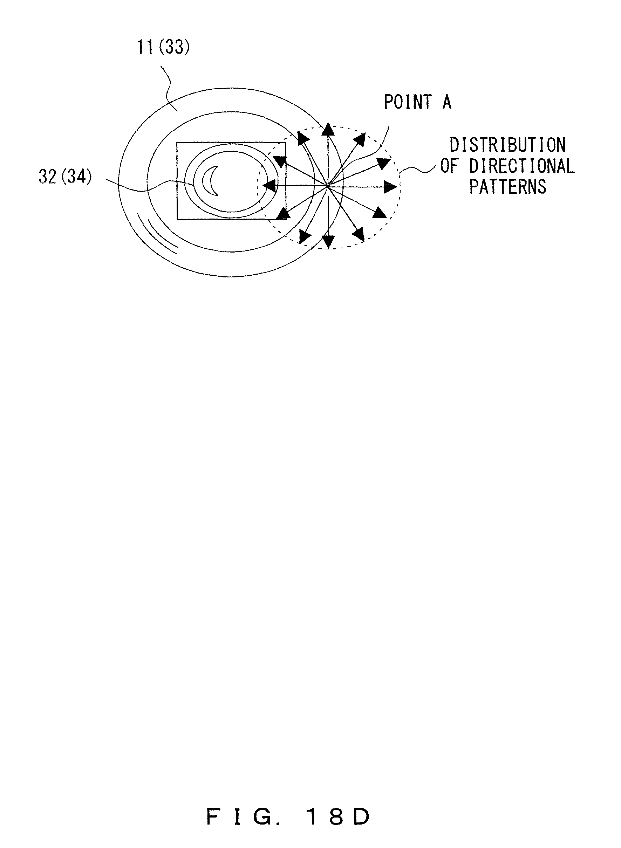

FIG. 18D is a diagram illustrating the distribution of the directional patterns of exiting light for a case in which maximum blasting is performed.

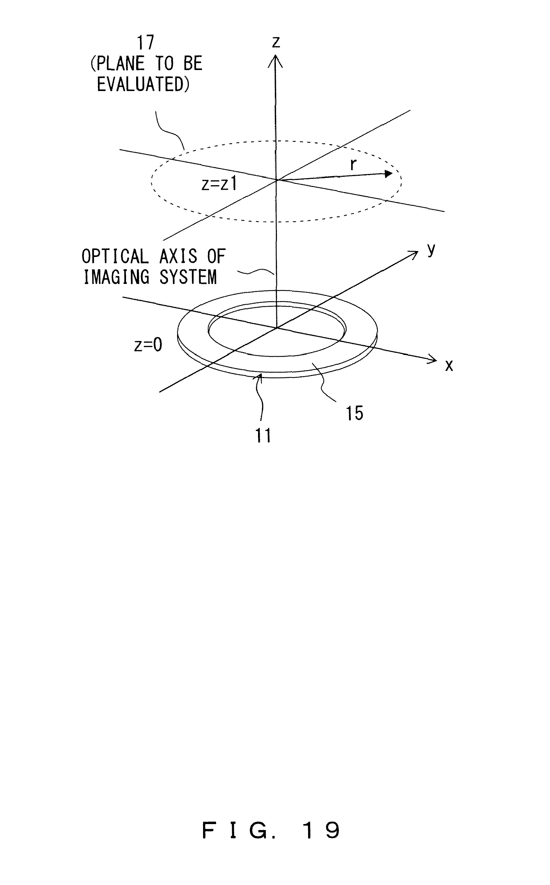

FIG. 19 is a diagram illustrating the positional relationship between the exit surface of a prism plate and a plane to be evaluated.

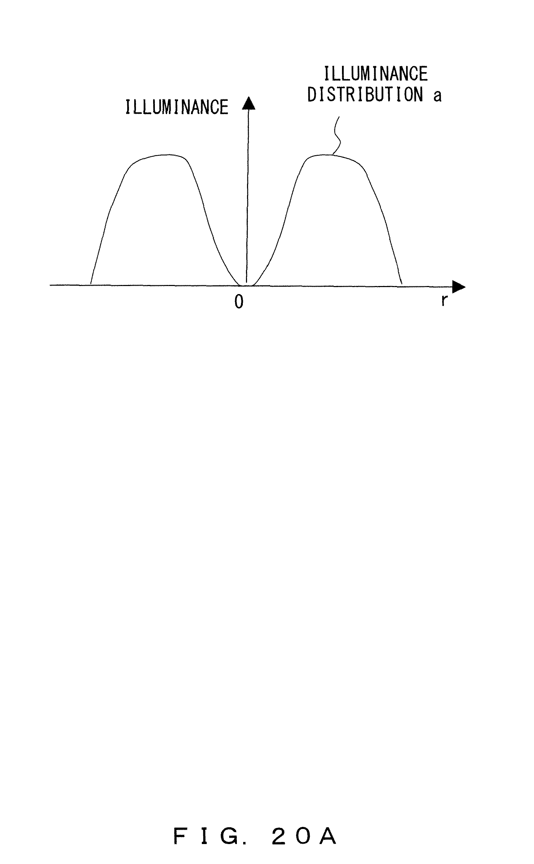

FIG. 20A is a diagram illustrating the illuminance distribution of exiting light on a plane to be evaluated for a case in which no blasting is performed.

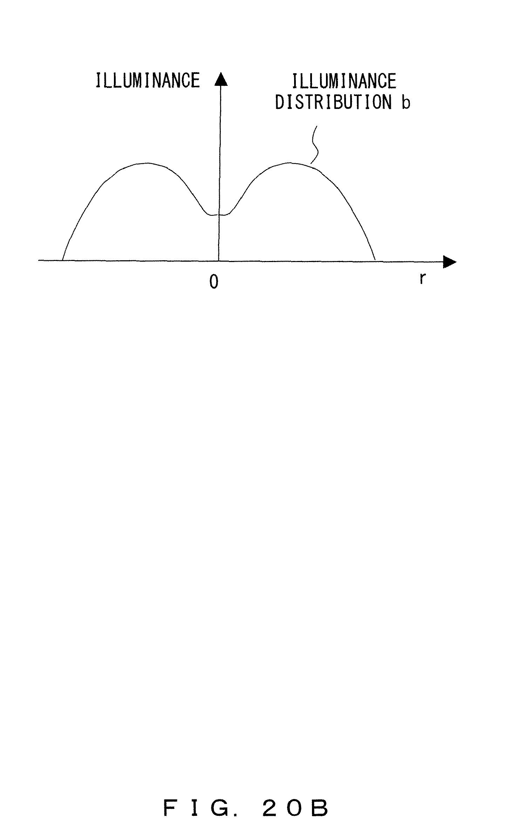

FIG. 20B is a diagram illustrating the illuminance distribution of exiting light on a plane to be evaluated for a case in which weak blasting is performed.

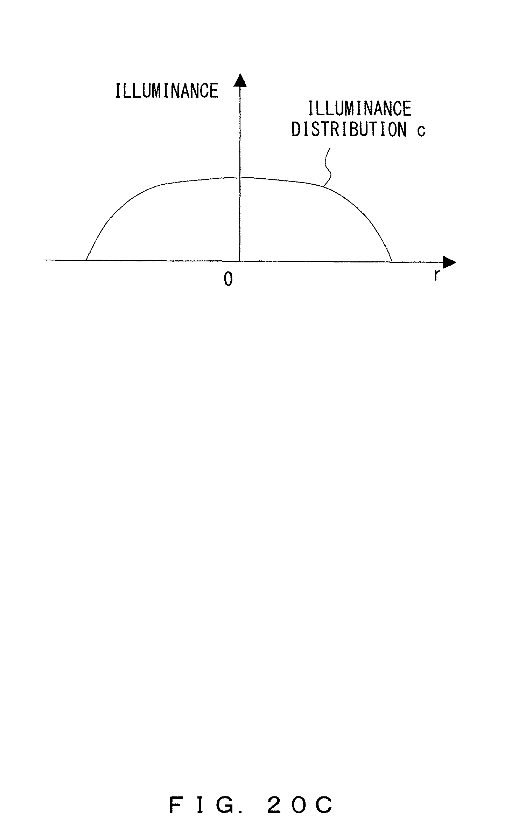

FIG. 20C is a diagrams illustrating the illuminance distribution of exiting light on a plane to be evaluated for a case in which moderately strong blasting is performed.

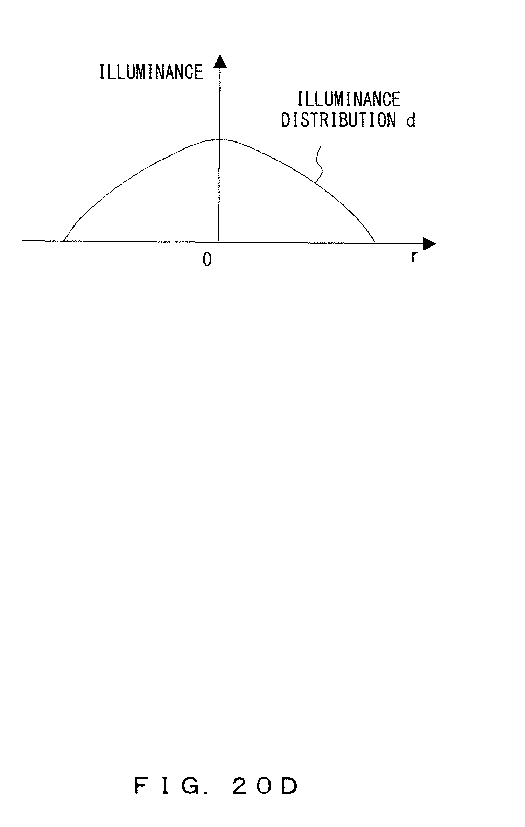

FIG. 20D is a diagrams illustrating the illuminance distribution of exiting light on a plane to be evaluated for a case in which maximum blasting is performed.

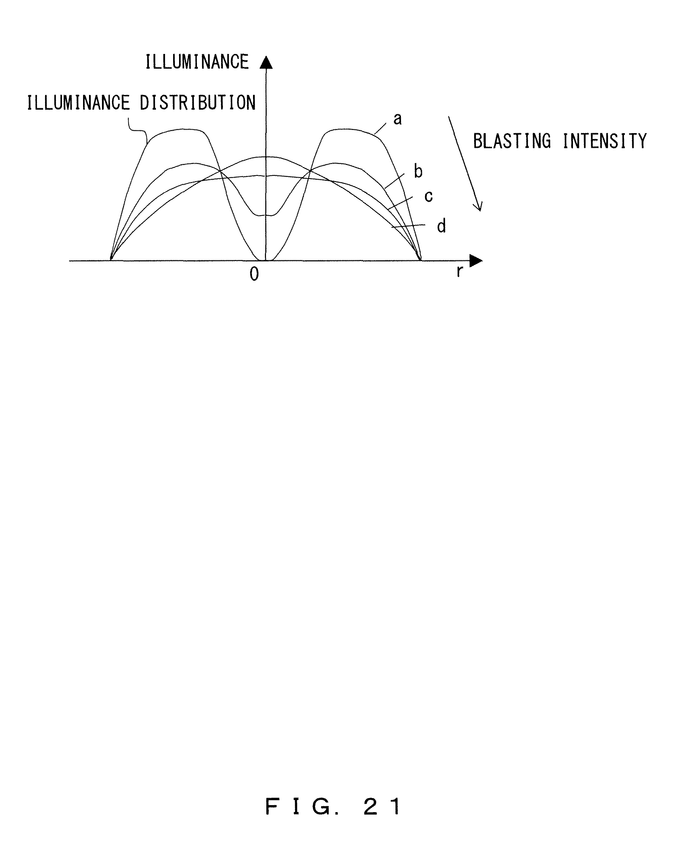

FIG. 21 is a diagram illustrating all the illuminance distributions of exiting light on planes to be evaluated for cases in which no blasting, weak blasting, moderately strong blasting, and maximum blasting are performed.

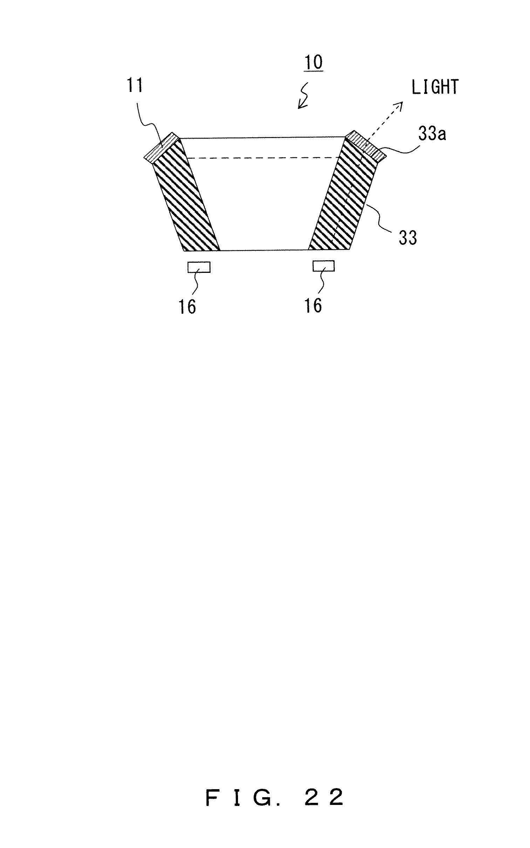

FIG. 22 is a diagram illustrating an illumination optical system in which the exit surface of a ring-shaped light guide has an oblique surface shaped like a circular truncated cone.

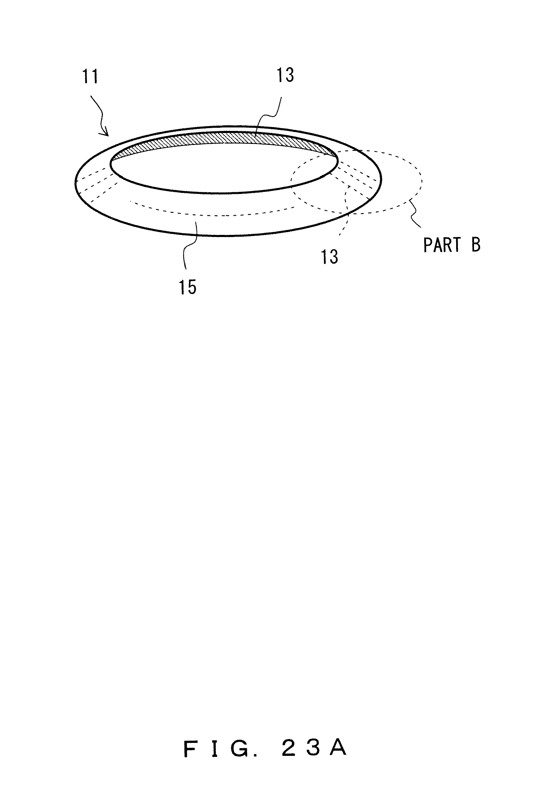

FIG. 23A is a diagram illustrating an external view of a prism plate shaped like a circular truncated cone.

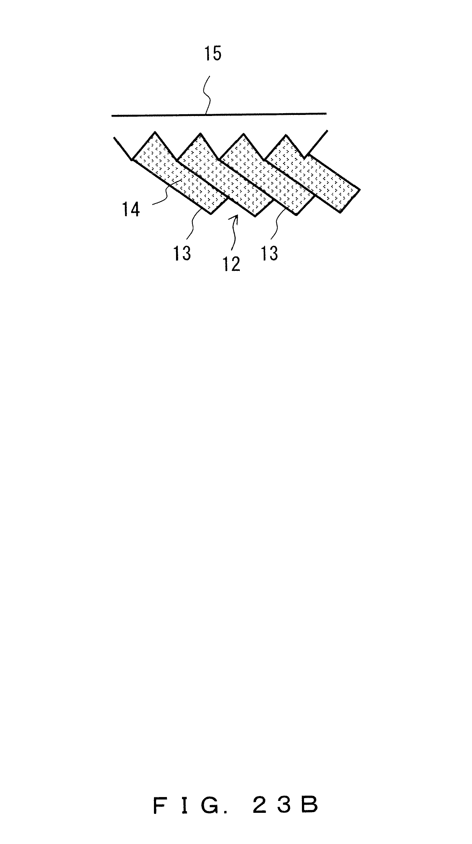

FIG. 23B is a diagram illustrating a magnified view of a part B of FIG. 23A.

DESCRIPTION OF EMBODIMENTS

Some embodiments of the present invention will be described with reference to the accompanying drawings.

[First Embodiment]

FIG. 8 is an external perspective view of a prism plate 11 of the present embodiment. FIG. 9 is a diagram illustrating directional patterns of the light exiting from the prism plate 11. FIG. 10 is a diagram illustrating the prism plate 11 viewed from the X-X direction.
The prism plate 11 of the present embodiment includes a prism surface 12 on one side of which a prism array in the shape of a triangular pole having multiple ridgelines 13 is formed, and in which minute bumps and dips 14 are formed on the prism surface 12.
In the present embodiment, a surface through which light enters is referred to as a prism surface 12, and a side of plane from which light is output on the other side of the prism surface 12 is referred to as an exit surface 15, so that the two sides will be distinguishable.
The prism surface having a prism array in the shape of a triangular pole may be formed by using well-known forming means or the like. The minute bumps and dips 14 may be formed by blasting the prism surface 12. The blasting generally refers to the processes in which non-metalic particles or metalic particles such as quartz sand are blown at a high speed to the surface of an object to be processed to roughen the surface, and the use of sandblasting is assumed in the present embodiment. The minute bumps and dips 14 are formed on the oblique surface of the prism array in the shape of a triangular pole. The minute bumps and dips 14 form diffusing surfaces of light.
Here, minute bumps and dips 14 refer to a region on which relatively-minute concave portions and convex portions are formed in an array or in a randomly continuous manner due to, for example, sandblasting. The convex portions may be shaped in various ways, for example, as a hemisphere, a sphere, (a frustum of) a cone, or (a frustum of) a pyramid. The pitch between concave portions and convex portions of the minute bumps and dips 14 or the height (depth) of bumps and dips may be determined in view of the power distribution or the like of light which is emitted from the exit surface 15. Note that the pitch between concave portions and convex portions or the height (depth) of bumps and dips may be influenced by the wavelength of the light being used.

The multiple ridgelines 13 formed on the prism surface 12 of the prism plate 11 may be parallel with each other, or alternatively, when the prism plate 11 is in a ring shape, a prism array in the shape of a triangular pole having the multiple ridgelines 13 in radial directions may be formed on the circumference (see FIG. 17A described later).
When a diffusing surface is formed by forming the minute bumps and dips 14 on the prism surface 12 with sandblasting, it is possible to obtain a desired power distribution of the exiting light by controlling the injection pressure or injection time of sand to be used. However, the descriptions of sandblasting will be omitted.
In the present embodiment, cases in which the minute bumps and dips 14 are formed with sandblasting have been described, but a method for forming the minute bumps and dips 14 is not limited to sandblasting. For example, as long as the minute bumps and dips 14 can be formed, it is not always necessary to use sandblasting, and forming means that uses a forming die or other means may be used.
As described above, it is possible to control the directional pattern of the light exiting from the exit surface 15 by performing blasting on the prism surface 12 through which light enters to form the minute bumps and dips 14. The directional patterns of exiting light may be freely controlled by controlling the intensity of blasting, i.e., the depth of the minute bumps and dips 14.
FIG. 9 is a diagram illustrating directional patterns in which the blasting performed on the prism surface 12 of the prism plate 11 is relatively weak. In FIGs. 9 and 10, the light incident on the prism surface 12 emitted from an LED 16 is deflected due to refraction on a prism oblique surface of the prism surface 12, and at the same time, is diffused by the minute bumps and dips 14. As diffused on the prism surface 12, the light is split into all directions, including longitudinal directions of the ridgelines 13.
In this case, an optical axis O which is the center of a light quantity distribution shifts to an angle determined due to the prism oblique surface. As a whole, the directional pattern is retained, and the directional patterns become similar to the directional patterns obtained when blasting is performed on the exit surface 15. The minute bumps and dips 14 have shallow bumps and dips when blasting is weak, and thus it is considered that the light exiting from the exit surface 15 has directional patterns in the directions determined due to the prism oblique surface of the prism surface 12.
FIG. 11 is a diagram illustrating the directional patterns of exiting light viewed from the exit surface 15 when strong blasting has been performed on the prism surface 12. FIG. 12A is a diagram schematically illustrating the refraction state of light when strong blasting was performed on the prism surface. FIG. 12B is a diagram schematically illustrating the refraction state of light when a period during which blasting is performed on the prism surface is shortened. FIG. 12C is a diagram schematically illustrating the refraction state of light when the blast injection pressure (flow velocity) to the prism surface is lowered.

As illustrated in FIG. 11, when strong blasting is performed on the prism surface 12 and thereby the minute bumps and dips 14 are formed, the directional patterns of the light exiting from the output surface 15 completely disappear, and the distribution becomes non-directional.

FIG. 12A is a schematic diagram of the surface of bumps and dips in the case of non-directivity, as will be described later with reference to FIG. 20D. In this case, each of the minute bumps and dips 14 is deeply formed on the prism surface 12 overall. Assuming that blasting is performed from the bottom of FIG. 12A in a vertical direction (from the bottom of the exit surface 15 in a vertical direction), the surface of each of the respective minute bumps and dips 14 has a wide range of angles from a vertical plane to a horizontal plane. Moreover, each of the respective minute bumps and dips 14 has, for example, a hemisphere shape or a bullet shape (the shape may be controlled by a blast flow velocity, time or the like), and thus normals of the surfaces of the minute bumps and dips 14 are evenly distributed with the center being the vertical direction.

An incident light beam L emitted from an LED 16 is incident to each of the minute bumps and dips 14, and deflects in accordance with an angle with the normal at that point. Accordingly, the deflection directions of light also widely distribute with the vertical direction (no deflection) of FIG. 12A being the center. For this reason, even though a plane on which light is incident on the prism surface 12 is generally oblique, the deflection direction of an incident light beam is unaffected. As a result, it is considered that the prism plate 11 of FIG. 12A is nondirectional.

As described above, when blasting is performed on the prism surface 12, it is possible to freely control the directional patterns of exiting light by choosing the intensity of blasting. Note that the intensity of blasting may be controlled by choosing the flow velocity or the injection time of the particle injection in blasting. Criteria for the flow velocity or injection time of the particle injection in blasting may vary depending on a particle diameter used in the particle injection, the material of the prism plate 11, or the like.

FIG. 12B is a schematic diagram illustrating the surface of bumps and dips in cases where the injection time is made short for weak blasting.

In these cases, the density of the minute bumps and dips 14 becomes sparse (the density of the minute bumps and dips 14 is half), and half of the oblique portion of the prism surface 12 has no bump or dip. Accordingly, there are prism deflections (at portions having no bump or dip) and diffusions (at portions having bumps and dips) in a mixed manner for an incident light, and thus it is considered that the exiting light has directivity and also diffuses.

Further, FIG. 12C is a schematic diagram illustrating the surface of bumps and dips in cases where the flow velocity (injection pressure) is made weak for weak blasting.

If the injection pressure is made weak, the depth of the minute bumps and dips 14 becomes shallow, and normals of the surfaces of minute bumps and dips distribute with a small variation (for example, $30° \pm 30°$) with an angle of the prism surface 12 being the center. As a result, the optical axis of diffused light becomes the same as that of a prism deflection (deflection characteristics of the prism surface 12), and it is considered that incident light is diffused with a deflection angle being the center and the diffused light distributes at an angle close to the deflection angle. As described above, it is considered that exiting light has directivity and also diffuses in a similar manner to the descriptions of FIG. 12B.

When glass beads are used as particles to perform blasting, the minute bumps and dips 14 become smooth. This corresponds to weak blasting, and thus exiting light has strong directional patterns of an ellipse shape.

FIGs. 12A-12C are schematic diagrams just for explanation purposes, and the actual shapes of the surfaces may differ. The actual bumps and dips of the prism surface on which sand blasting is performed have a nonuniform amplitude and cycle, and the shapes may not be like hemispheres or bells as illustrated in FIGs. 12A-12C.

However, the amplitude of the bumps and dips on a prism surface is generally large, and as described above, the directions of normals on the surface evenly distribute. As a result, an exiting light becomes nondirectional.

The state of the surface of bumps and dips on a prism surface, that is, the surface roughness of a prism surface, may be represented with the parameters defined in JIS-B0601.

Arithmetic average roughness $Ra(\mu m)$ is one of the parameters defined in JIS-B0601, and is represented as

$$Ra=1/L*\int_0^L |f(x)|dx,$$

where the state of bumps and dips is indicated by a roughness curve corresponding to a cross-sectional shape, and an average line of the amplitude of a surface is calculated, and taking the direction of the calculated average line as X-axis, f(x) means the deviation from the average line.

Note that "L" is a reference length in the x-axis direction.

The surface roughness of a prism surface may be represented as a parameter defined in JIS-B0601: 1994 (10-point average roughness Rz).

The parameter is a value obtained by selecting the top five values respectively from the height of a peak and the depth of a valley and adding average values together, and what is represented in this parameter is similar to a maximum amplitude.

The state of the bumps and dips of FIGs. 9 and 11 are represented by using the above-mentioned parameters. In the case of FIG. 9, where weak blasting is performed, the state is represented, for example, as Ra=0.8μm and Rz=5.5μm. In this case, the amplitude of bumps and dips is small, and the directivity determined due to a prism oblique surface remains.

In the case of FIG. 11 where strong blasting is performed, the surface roughness is represented, for example, as Ra=1.6μm and Rz=16.4μm. In this case, the amplitude of bumps and dips is sufficiently large, and thus the directivity due to the exiting light disappears.

According to the present embodiment, the prism plate 11 includes the prism surface 12 on which a prism array in the shape of a triangular pole having the multiple ridgelines 13 is formed, and on which there are the minute bumps and dips 14 formed on the prism surface 12. Thus, the minute bumps and dips 14 may provide the directivity to the exit directions of illumination light, and control the illuminance distribution.

[Second Embodiment]

FIGs. 13 and 14 are diagrams illustrating the prism plate 11 according to the present embodiment. FIG. 13 is a diagram illustrating the directional patterns of the light exiting from the prism plate 11. FIG. 14 is a diagram illustrating the prism plate 11 viewed from XIV-XIV direction.

Note that the same reference signs are given to the same or corresponding members as in the first embodiment.

In the present embodiment, not only the prism surface 12 through which light enters is blasted to form the minute bumps and dips 14, but also the exit surface 15 from which illumination light is emitted is blasted to form minute bumps and dips 14'. The light incident on the prism surface 12 is diffused at the minute bumps and dips 14 of the prism surface 12, and is further diffused at the minute bumps and dips 14' of the exit surface 15 before the light is emitted.

In this case, in a similar manner to the first embodiment, the directivity of the light exiting from the exit surface 15 is dominantly controlled by the intensity of blasting to the prism surface 12 through which the light enters.

According to the present embodiment, it is possible to more precisely control the directivity by performing blasting not only on the prism surface 12 but also on the exit surface 15. There is another advantage in which a smoother distribution of illumination light may be obtained as the light incident on the prism surface 12 is diffused twice, once on the prism surface 12 through which the light enters and once on the exit surface 15 from which the light exits.

[Third Embodiment]

FIG. 15 is a diagram illustrating a forming metal die 20 of the prism plate 11 according to the present embodiment.

In the first embodiment, the case is described in which blasting is performed directly on the prism surface 12 of the prism plate 11 to form the minute bumps and dips 14. However, a method for forming the minute bumps and dips 14 is not limited to the case of the first embodiment. For example, the minute bumps and dips 14 may be formed by using forming means.

Generally, the prism plate 11 is formed by forming a plastic material such as acryl. For this reason, as illustrated in FIG. 15, the prism plate 11 is actually formed by forming minute bumps and dips 25 on a forming metal die 20 and transferring the formed minute bumps and dips 25 onto a forming material 23.

Accordingly, the forming metal die 20 includes an upper die 21 and a lower die 22 that are arranged opposite to each other. The plastic material 23 is arranged between a forming surface 21a of the upper die 21 and a forming surface 22a of the lower die 22. Then, the plastic material 23 is heated up to a specified temperature and is softened. Next, the upper die 21 and the lower die 22 are moved to get relatively closer to each other in order to pressurize the plastic material 23, and thereby the prism plate 11 is formed. FIG. 15 is a diagram in which a metal die of the above-described pressure forming method is described, and is applicable to the case of using injection molding in which a forming material is injected in the space surrounded by a metal die.

In the forming metal die 20, a prism array in the shape of a triangular pole having the multiple ridgelines 24 is formed on the forming surface 22a of the lower die 22, and the minute bumps and dips 25 are formed on an oblique surface on which the prism array is formed. The minute bumps and dips 25 may be formed, for example, by performing blasting thereon. In so doing, it is possible to form the prism plate 11 by transferring the minute bumps and dips 25 to the forming material 23. However, the minute bumps and dips 25 may be formed on the lower die 22 by means other than blasting as long as the means are capable of micromachining.

In the present embodiment, cases in which the minute bumps and dips 25 are formed on the lower die 22 have been described. However, the configuration is not limited to such cases. For example, minute bumps and dips may be formed on the forming surface 21a of the upper die 21. Accordingly, it is possible to form minute bumps and dips on both the prism surface and the exit surface of the prism plate 11 (see the above-described FIG. 13).

According to the present embodiment, a prism array in the shape of a triangular pole having the multiple ridgelines 24 is formed, for example, on the forming surface 22a of the lower die 22, and the minute bumps and dips 25 are formed at least on an oblique surface of the prism array of the lower die 22 on which the prism array is formed. Then, the minute bumps and dips 25 are transferred to the forming material 23. Accordingly, the directivity is achieved in the exit directions of illumination light, and it is possible to obtain the prism plate 11 with a controllable illuminance distribution.

[Fourth Embodiment]

FIG. 16 is a diagram illustrating a case in which an illumination optical system 10 is applied to an imaging device 30 for reading information. FIG. 17A is a diagram illustrating the prism plate 11 viewed from the prism surface 12. FIG. 17B is a diagram illustrating the positional relationship between the prism surface 12 and a light guide 33. Note that the same reference signs are given to the same or corresponding members as in the first embodiment.

The illumination optical system 10 of the imaging device 30 is for irradiating an object to be captured 31 with light so as to receive and capture the light reflected from the object to be captured 31 (for example, a palm) by an image sensor 32 which functions as an imaging element.

The illumination optical system 10 includes LEDs 16 which function as a plurality of luminous elements circularly arranged around the image sensor 32, a ring-shaped light guide (cylindrical body) 33 arranged above the plurality of the LEDs 16, and a ring-shaped prism plate 11 arranged above an exit surface 33a of the light guide 33.

The light guide 33 is made of, for example, transparent resin (or glass or the like), and guides the light from the plurality of the LEDs 16 upward. Moreover, the light guide 33 irradiates the object to be captured 31 with uniform light via the prism plate 11. Due to the light guide 33, it is possible to guide the light from the LEDs 16 such that the light does not deviate from an optical path. For that purpose, the light guide 33 is ring-shaped so as to conform to the arrangement of the LEDs 16.

Note that the ring shape refers to an annular shape having a hole in the center, and includes, for example, a circular ring, a rectangular ring, and an ellipstical ring.

As illustrated in FIG. 17A, the ring-shaped prism plate 11 is provided with the prism surface 12 in which a prism array in the shape of a triangular pole having multiple ridgelines 13 in radial directions is formed on the circumference in order to irradiate the object to be captured 31 with the light exiting from the exit surface 33a of the light guide 33. It is desirable that the multiple ridgelines 13 be formed at regular intervals, but it is not always necessary for the multiple ridgelines 13 to be strictly formed at regular intervals. Moreover, the multiple ridgelines 13 are formed in radial directions towards the center of the ring, but it is not necessary for the multiple ridgelines 13 to be strictly formed towards the center.

As illustrated in FIG. 17B, the prism surface 12 is arranged so as to be opposite to the LEDs 16 (the side of the exit surface 33a of the light guide 33). Furthermore, the minute bumps and dips 14 are formed on the prism surface 12 of the ring-shaped prism plate 11 (see FIG. 17A).

The minute bumps and dips 14 in the present embodiment are similar to those of the first embodiment or the like.

As illustrated in FIG. 16, the light emitted from the LED 16 is guided by the ring-shaped light guide 33 to the object to be captured 31 that is an object to be read. On the inner side of the ring-shaped light guide 33, an imaging system having an image sensor 32 and an optical lens 34 is arranged.

FIGs. 18A-18D are diagrams illustrating the illumination optical system 10 of the imaging device 30 viewed from the side of the exit surface 15. Moreover, FIGs. 18A-18D are diagrams in which the distributions of the directional patterns of the light exiting from a point (point A) on the prism plate 11 are compared with each other.

Note that the parameter in the directivity distributions of FIGs. 18A-18D is the blasting intensity (here, the injection time). Moreover, in the center of the imaging device 30, the imaging system comprised of the optical lens 34 and the image sensor 32 is arranged.

Further, the image sensor 32 is surrounded by the ring-shaped light guide 33 and the ring-shaped prism plate 11 which is arranged over the ring-shaped light guide 33. In this case, the circularly arranged LEDs 16 are the illumination light source, and illumination light is emitted from the ring-shaped prism plate 11 after passing through the light guide 33.

In FIGs. 18A-18D described below, it is assumed that blasting is not performed on the exit surface 15 of the prism plate 11.

FIG. 18A illustrates a case in which blasting is also not performed on the prism surface 12 of the prism plate 11, where the strongest directivity is indicated.

In FIG. 18A, the light exiting from the point A is directed by the prism plate 11 only in the tangential direction of the ring. In this case, even if the illumination from the entirety of the exit surface 15 of the ring-shaped prism plate 11 is added up, the illumination is not directed in the radial directions. As a result, the illuminance distribution becomes doughnut-shaped, where the central part is dark and the peripheral part is bright.

FIG. 18B illustrates a case in which weak blasting is performed on the prism surface 12, and FIG. 18C illustrates a case in which blasting stronger than that of FIG. 18B is performed on the prism surface 12.

In the cases of both FIGs. 18B and 18C, it is illustrated that illumination light exits not only in the tangential direction but also in the radial directions. Accordingly, the illumination reaches the central part of the ring. The directivity varies depending on the intensity of blasting, and the directivity is weaker in FIG. 18C where blasting is relatively stronger than the directivity in FIG. 18B. For this reason, the ellipse of FIG. 18C that represents the directivity distribution is more circular than that of FIG. 18B.

When the bump-and-dip states of the respective prism surfaces of FIGs. 18B and 18C are represented with surface roughness parameters as described above, in the case of FIG. 18B where blasting is weak, the state is represented as Ra=0.8μm and Rz=5.5μm. In the case of FIG. 18C where blasting is only moderately strong, the state is represented as Ra=1.3μm and Rz=12.8μm. In other words, the amplitude of bumps and dips is greater in FIG. 18C.

Further, FIG. 18D illustrates a case in which sufficient (strong) blasting is performed on the prism surface 12, and the directivity distribution is even more circular and non-directional.

In the case of FIG. 18D, the bump-and-dip state of the prism surface is represented, for example, as Ra=1.6μm and Rz=16.4pm. As blasting is sufficiently strong, the bump-and-dip state has a sufficiently large amplitude.

In this case, the illumination light exiting from the exit surface 15 of the ring-shaped prism plate 11 gathers to the central part of the ring, and thus the intensity of illumination at the central part of the ring becomes high.

FIG. 19 is a diagram illustrating the positional relationship between the exit surface 15 of the prism plate 11 and a plane to be evaluated (plane to be irradiated) 17. In FIG. 19, the plane to be evaluated (plane to be irradiated) 17 is represented as "z=z1", where the optical axis of an imaging system is z-axis, and the exit surface 15 of the prism plate 11 is represented as "z=0".

FIGs. 20A-20D are diagrams in which the illuminance distributions of illumination light on the plane to be evaluated 17 are compared with each other. In FIGs. 20A-20D, the horizontal axis represents the distance from the optical axis "r", and the vertical axis represents the intensity (W/m2) of illumination.

In FIGs. 20A-20D, when the intensity of blasting is indicated with an injection time, the injection time in FIG. 20A is 0 (no blasting), the injection time in FIG. 20B is "0 to 1/2" (weak blasting), the injection time in FIG. 20C is "1/2" (slightly strong blasting), and the injection time in FIG. 20D is "1" (strong blasting).

Further, FIG. 21 is a diagram illustrating all the illuminance distributions of FIGs. 20A-20D.

FIG. 20A is a diagram corresponding to FIG. 18A. FIG. 20A illustrates the illuminance distribution of a case in which no blasting is performed on the prism surface 12 (and on the exit surface 15). In this case, the illumination light does not reach the central part of the ring of the ring-shaped prism plate 11, and the illuminance distribution becomes doughnut-shaped, where the peripheral part of the ring is bright and in a circular shape.

FIG. 20B is a diagram corresponding to FIG. 18B. FIG. 20B illustrates the illuminance distribution of a case in which weak blasting is performed on the prism surface 12. In this case, the illumination light is also distributed in radial directions due to the diffusion effect of blasting, and thus the illumination reaches the central part of the ring, while the illuminance distribution is still doughnut-shaped where the peripheral part of the ring is bright and in a circular shape.

FIG. 20C is a diagram corresponding to FIG. 18C. FIG. 20C illustrates the illuminance distribution of a case in which blasting stronger than that that of FIG. 18B is performed on the prism surface 12. In this case, the distribution of illumination to the central part of the ring is large, and the illuminance distribution is even all over the plane to be evaluated 17.

FIG. 20D is a diagram corresponding to FIG. 18D. FIG. 20D illustrates the illuminance distribution of a case in which sufficient (strong) blasting is performed on the prism surface 12. In this case, the directivity of exiting light to the tangential direction of a ring disappears, and due to the concentration of the illumination light towards the central part of the ring, the illuminance distribution becomes uni-modal (shaped like a single mountain). The shape of the illuminance distribution in this case is basically the same as that of the case in which there is no ring-shaped prism plate 11. In other words, the shape of the illuminance distribution in this case is similar to that of the case in which strong blasting is performed on one side of a transparent flat glass plate.

As described above, as the intensity of blasting on the prism surface 12 changes, the illuminance distribution on the plane to be evaluated 17 changes as illustrated in FIGs. 20A-20D.

FIG. 21 is a diagram illustrating all the illuminance distributions of FIGs. 20A-20D.

As illustrated in FIG. 21, depending on the intensity of blasting, the illuminance distribution continuously changes from the circular a-curve to the uni-modal d-curve by way of the b-curve and c-curve. Accordingly, it is possible to obtain a desired illuminance distribution of illumination light by altering the intensity of blasting on the prism surface.

Having a directional pattern in the tangential direction of a ring for the emission of illumination light is effective in shading the surface of an object in the image acquired by an imaging system, or is effective in avoiding shading.

Moreover, having a directional pattern in the tangential direction of a ring may give a directional pattern to the light reflected from an object to avoid or emphasize the specularly reflected light. On the other hand, it is possible to control the illuminance distribution without depending on the prism plate 11. For example, the illuminance distribution may be controlled only by the exit directions that are in the radial directions and by the diffusivity without having directivity in the tangential direction of the ring.

In the present embodiment, cases in which blasting is not performed on the exit surface 15 of the prism plate 11 have been described. However, the configuration is not limited to such cases. For example, blasting may be performed on both the prism surface 12 and the exit surface 15 of the prism plate 11 (see FIG. 13). In this case, compared with the case in which blasting is performed only on the prism surface 12, it is possible to more extensively control the directional pattern of illumination light in the exit directions and the illuminance distribution.

According to the present embodiment, it is possible to control the illuminance distribution while directional patterns are still given to the exit directions of illumination light by having the LEDs 16 arranged around the image sensor 32 and the ring-shaped prism plate 11, where in order to irradiate the image sensor 32 with light emitted from the LEDs 16, the prism surface 12 on a circumference of which a prism array in the shape of a triangular pole having the multiple ridgelines 13 in radial directions is formed is arranged on a side of the LEDs 16, and the minute bumps and dips 14 are formed on the prism surface 12.

[Fifth Embodiment]

FIG. 22 is a diagram illustrating the illumination optical system 10 in which the exit surface 33a of the ring-shaped light guide 33 has an oblique surface shaped like a circular truncated cone. FIG. 23A is a diagram illustrating an external view of the prism plate 11 shaped like a circular truncated cone, and FIG. 23B is a diagram illustrating a magnified view of a part B of FIG. 23A. Note that the same reference signs are given to the same or corresponding members as in the first embodiment.

In the first to fourth embodiments, it was supposed that the exit surface 33a of the light guide 33 as well as the prism surface 12 of the prism plate 11 are planes, but they are supposed to be shaped like a circular truncated cone in the present embodiment.
In other words, depending on the distribution of the light quantity from the LEDs 16, the size of the light guide 33, the size of a plane to be irradiated which is an object to be captured, or the distance to the plane to be irradiated, there are cases in which it is appropriate for the exit surface 15 of the light guide 33 to be an oblique surface shaped like a circular truncated cone.

In such cases, as illustrated in FIG. 22, the exit surface 15 of the ring-shaped light guide 33 is an oblique surface shaped like a circular truncated cone, and in a similar manner, the ring-shaped prism plate 11 also becomes three-dimensional with an oblique surface shaped like a circular truncated cone.

In FIG. 23A, the ring-shaped prism plate 11 arranged over the exit surface 33a of the light guide 33 is formed on an oblique surface shaped like a circular truncated cone. In FIG. 23B, in a similar manner as the fourth embodiment, the prism plate 11 has a prism surface 12 on which a prism array in the shape of a triangular pole having the multiple ridgelines 13 in radial directions is formed on the circumference. The prism array consist of, for example, 180 pieces (the pitch of the prism array is "2°") with the vertical angle being 90 degree and the depth being 0.2mm.

Further, as illustrated in FIG. 23B, the minute bumps and dips 14 are formed by sandblasting the prism surface 12. Due to the minute bumps and dips 14, a diffusing surface is formed on the prism surface 12.

In the present embodiment, cases in which blasting is performed on the prism surface 12 of the prism plate 11 to form the minute bumps and dips 14 have been described. However, the configuration is not limited to such cases. For example, it is possible to more extensively control the directional pattern of illumination light by blasting both the prism surface 12 and the exit surface 15 (see FIG. 13).

According to the present embodiment, the exit surface 33a of the light guide 33 is an inclined surface shaped like a circular truncated cone and the exit surface 15 of the prism plate 11 is an oblique surface of a circular truncated cone, and light is emitted from the exit surface 15 in a diffused manner. Accordingly, it is possible to control the illuminance distribution while directional patterns are still given to the exit directions of illumination light. It is considered that the illuminance distribution of the present embodiment correspond to curves a-d of the illuminance distribution of FIG. 21.

**Claims**

1. A prism plate comprising:

   a prism surface on one side of which a prism array in a shape of a triangular pole having multiple ridgelines is formed; and
   minute bumps and dips formed on the prism surface.

2. The prism plate according to claim 1, wherein the minute bumps and dips have a depth variable depending on a directional pattern of light which is incident to the prism surface and is then emitted from an exit surface on an opposite side of the prism surface.

3. The prism plate according to claim 1 or 2, wherein the minute bumps and dips are formed by performing a blasting process thereon.

4. The prism plate according to claim 1, wherein the minute bumps and dips are formed on both the prism surface and the exit surface.

5. The prism plate according to claim 1, wherein the prism surface is formed on an oblique surface in a shape of a circular truncated cone.

6. An illumination optical system of an imaging device for irradiating an object to be captured with light so as to receive and capture light reflected from the object to be captured by an image element, the illumination optical system comprising:

a plurality of luminous elements arranged around the imaging element; and
a ring-shaped prism plate, where in order to irradiate the object to be captured with light emitted from the plurality of luminous elements, a prism surface on a circumference of which a prism array in a shape of a triangular pole having multiple ridgelines in radial directions is formed is arranged on a side of the plurality of luminous elements, and minute bumps and dips are formed on the prism surface.

**7.** The illumination optical system according to claim 6, wherein
the minute bumps and dips have a depth variable depending on a directional pattern of light which is incident to the prism surface and is then emitted from an exit surface on an opposite side of the prism surface.

**8.** The illumination optical system according to claim 6 or 7, wherein
the minute bumps and dips are formed by performing a blasting process thereon.

**9.** The illumination optical system according to claim 6, wherein
the minute bumps and dips are formed on both the prism surface and the exit surface.

**10.** The illumination optical system according to claim 6, wherein
the prism surface is formed on an oblique surface in a shape of a circular truncated cone.

**11.** A forming die of a prism plate having a first die and a second die arranged so as to be opposite to each other, and forming a prism plate by heat-softening and pressurizing a forming material arranged between the first die and the second die or forming a prism plate by injecting a forming material into a space surrounded by the first die and the second die, wherein:

on a forming surface of one of the first die or the second die, a prism array in a shape of a triangular pole having multiple ridgelines is formed; and
on an oblique surface of the prism array at least on a side of the first die and the second die on which the prism array is formed, minute bumps and dips are formed.

**12.** The forming die according to claim 11, wherein the minute bumps and dips are formed by performing a blasting process thereon.

F I G. 1

EXIT LIGHT

111

112

113

INCIDENT LIGHT

F I G. 2

INCIDENT
LIGHT

113 EXIT LIGHT
111

EXIT LIGHT

EXIT LIGHT

EXIT LIGHT

INCIDENT
LIGHT

# F I G. 3

114

111

112

113

F I G. 4

DISTRIBUTION OF
DIRECTIONAL PATTERNS

114

VI →

VI →

113

111

F I G. 5

DISTRIBUTION OF
DIRECTIONAL PATTERNS

114

111

112

113

F I G. 6

DISTRIBUTION
OF DIRECTIONAL
PATTERNS

114　　　　　　　　　113　　　　　111

F I G. 7

11

15

14

14

13

12

14      13      13

F I G. 8

11

15

14

13

12

X →

X →

0

DISTRIBUTION OF
DIRECTIONAL PATTERNS

16

F I G. 9

11    0    DISTRIBUTION OF
                DIRECTIONAL PATTERNS
                              15

14
        12    16    13

F I G. 1 0

DISTRIBUTION OF DIRECTIONAL PATTERNS

FIG. 11

F I G. 1 2 A

F I G. 1 2 B

FIG. 1 2 C

DISTRIBUTION OF
DIRECTIONAL PATTERNS

10

XIV →

14'  15

11

12

14   XIV →   16

F I G.  1 3

DISTRIBUTION OF
DIRECTIONAL PATTERNS

F I G.  1 4

20

23

24    25

22a

21a

22

F I G. 1 5

30

31

11

10

12

33a

33

32

16    16    16    16

F I G. 1 6

F I G. 1 7 A

11

12

33a

34

33

# FIG. 17B

30

11 (33)

32 (34)

DISTRIBUTION OF
DIRECTIONAL PATTERNS

POINT A

F I G. 1 8 A

11 (33)

DISTRIBUTION OF
DIRECTIONAL PATTERNS

POINT A

32 (34)

F I G. 1 8 B

11 (33)

DISTRIBUTION OF
DIRECTIONAL PATTERNS

32 (34)

POINT A

F I G. 1 8 C

11 (33)

POINT A

DISTRIBUTION
OF DIRECTIONAL
PATTERNS

32 (34)

F I G. 1 8 D

17
(PLANE TO BE
EVALUATED)

z

z=z1

r

OPTICAL AXIS OF
IMAGING SYSTEM

y

z=0

x

15

11

F I G. 1 9

F I G. 2 0 A

ILLUMINANCE

ILLUMINANCE
DISTRIBUTION b

0

r

F I G. 2 0 B

ILLUMINANCE

ILLUMINANCE
DISTRIBUTION c

0

r

F I G. 2 0 C

ILLUMINANCE

ILLUMINANCE
DISTRIBUTION d

0                                         r

F I G. 2 0 D

F I G. 2 1

10

11 LIGHT

33a

33

16 16

F I G. 2 2

11    13

15    13    PART B

F I G. 2 3 A

F I G. 2 3 B

<div align="center">

**INTERNATIONAL SEARCH REPORT**

</div>

| | International application No. |
|---|---|
| | PCT/JP2010/000211 |

**A. CLASSIFICATION OF SUBJECT MATTER**
*G02B5/04*(2006.01)i, *G02B5/02*(2006.01)i, *G03B15/02*(2006.01)i

According to International Patent Classification (IPC) or to both national classification and IPC

**B. FIELDS SEARCHED**

Minimum documentation searched (classification system followed by classification symbols)
G02B5/04, G02B5/02, G03B15/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 9-184906 A (Enplas Corp.),<br>15 July 1997 (15.07.1997),<br>claims; paragraphs [0035], [0039], [0040]; fig. 7<br>& US 2002/0005991 A1 | 1-4<br>5-10 |
| X<br>Y | JP 6-148408 A (Sekisui Chemical Co., Ltd.),<br>27 May 1994 (27.05.1994),<br>claims; paragraphs [0016], [0022], [0024], [0026]; fig. 3<br>(Family: none) | 1-4,11-12<br>5-10 |
| X<br>Y | JP 2008-242002 A (Asahi Kasei Chemicals Corp.),<br>09 October 2008 (09.10.2008),<br>claims; paragraphs [0017], [0018], [0020]<br>(Family: none) | 1-4,11-12<br>5-10 |

☒ Further documents are listed in the continuation of Box C.   ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 March, 2010 (08.03.10) | 16 March, 2010 (16.03.10) |

| Name and mailing address of the ISA/<br>Japanese Patent Office | Authorized officer |
|---|---|
| Facsimile No. | Telephone No. |

Form PCT/ISA/210 (second sheet) (July 2009)

**EP 2 495 588 A1**

**INTERNATIONAL SEARCH REPORT**

| | International application No. |
|---|---|
| | PCT/JP2010/000211 |

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | WO 2007/108443 A1  (Mitsubishi Rayon Co., Ltd.),<br>27 September 2007 (27.09.2007),<br>paragraphs [0035], [0037]<br>& KR 10-2008-0106267 A   & CN 101405626 A | 1-2,4,11<br>5-10 |
| Y | JP 2006-259379 A  (Canon Inc.),<br>28 September 2006 (28.09.2006),<br>claims; fig. 1 to 33<br>& US 2006/0209524 A1     & CN 1834770 A | 5-10 |
| A | JP 2004-327051 A  (Nikkei Mfg. Co., Ltd.),<br>18 November 2004 (18.11.2004),<br>claims; fig. 1 to 5<br>(Family: none) | 1-12 |

Form PCT/ISA/210 (continuation of second sheet) (July 2009)

45

**REFERENCES CITED IN THE DESCRIPTION**

**Patent documents cited in the description**

- JP 4198246 B
- JP 2007264639 A